# EUROPÄISCHE PATENTANMELDUNG

(11) **EP 2 261 008 A1**
(43) Veröffentlichungstag der Anmeldung: **15.12.2010**
(21) Anmeldenummer: 09162197.9
(22) Anmeldetag: 08.06.2009
(51) Int. Cl.: B29C 65/08, B29C 59/02, B26D 7/08

(54) **Vorrichtung und Verfahren zur Ultraschallbehandlung**

(71) Anmelder: Telsonic Holding AG, 9552 Bronschhofen (CH)
(72) Erfinder: Möglich, Hartmut, 76275 Ettlingen (DE)
(74) Vertreter: Müller, Christoph Emanuel

(57) **Zusammenfassung**

Eine Vorrichtung zum Ultraschallschweissen von zwei Kunststofffolien enthält eine Sonotrode (2), die mittels Anregern (23, 24) zu torsionalen Ultraschallschwingungen anregbar ist. Die Sonotrode (2) weist einen Schlitz (4) auf, in den ein Eingriffsglied (5) eines Ambosses (3) eingeführt ist, so dass ein Schweissspalt für die beiden Kunststofffolien (11, 12) gebildet wird. Zum Erzielen einer Schweissverbindung werden die Folien durch den Schweissspalt geführt.

## Beschreibung

Die Erfindung betrifft eine Vorrichtung und ein Verfahren zur Ultraschallbehandlung gemäss dem Oberbegriff der unabhängigen Ansprüche. Mit einer derartigen Vorrichtung können beispielsweise zwei flächig aufeinander liegende Kunststofffolien randseitig miteinander verbunden werden (Ultraschallschweissen). Auf diese Weise lassen sich beispielsweise Schlauchbeutel zum Verpacken von Verpackungsgut herstellen. Mit der erfindungsgemässen Vorrichtung ist es auch möglich, Kerben (z.B. als Aufreisshilfe) in Folien aufzubringen, wobei hierfür auch nur eine Folie in der Vorrichtung verarbeitet werden könnte. Schliesslich sind auch Trennschweissverfahren von der Erfindung erfasst.

Vorrichtungen zum sogenannten torsionalen Ultraschallschweissen sind seit einer gewissen Zeit bekannt und gebräuchlich. Eine solche Schweissvorrichtung ist beispielsweise aus der EP 1 930 148 A1 bekannt geworden. Die Vorrichtung enthält eine Sonotrode, die mittels Anregern zu torsionalen Ultraschallschwingungen anregbar ist. Gegenüber der Sonotrode befindet sich ein sogenannter Amboss, der eine Formteilaufnahme zur Aufnahme eines Kunststoffgehäuses aufweist. Mit dieser Vorrichtung lässt beispielsweise ein Deckel fest an das Kunststoffgehäuse anschweissen. Die miteinander zu verbindenden Teile werden während dem Schweissvorgang wenigstens in Bezug auf die Längsachse der Sonotrode nicht bewegt. Die Vorrichtung eignet sich somit zum stationären Verschweissen; zum kontinuierlichen Schweissen z. B. von Endlosfolien ist die Vorrichtung jedoch nicht geeignet. Im Übrigen können mit dieser Vorrichtung zwei Folien nicht auf geeignete Weise und insbesondere nicht randseitig miteinander verbunden werden.

Es ist deshalb eine Aufgabe der vorliegenden Erfindung, die Nachteile des Bekannten zu vermeiden und insbesondere eine Vorrichtung und ein Verfahren der eingangs genannten Art zu schaffen, mit welcher/welchem zwei flächige Gegenstände auf einfache und vorteilhafte Art und Weise miteinander verbunden werden können. Insbesondere soll die Vorrichtung und das Verfahren dazu geeignet sein, zwei oder mehrere Folienteile randseitig miteinander zu verbinden. Die Vorrichtung soll aber auch das Erzeugen von Kerben oder ein Utraschallschweisstrennen von wenigstens einem Gegenstand ermöglichen. Weiter soll sich das Verfahren durch eine effiziente und sichere Betriebsweise auszeichnen.

Erfindungsgemäss werden diese anderen Aufgaben mit einer Vorrichtung und einem Verfahren gemäss der unabhängigen Patentansprüche gelöst.

Die erfindungsgemässe Vorrichtung weist eine mittels Anregern zu torsionalen Ultraschallschwingungen anregbare Sonotrode auf. Derartige Sonotroden sind dem Fachmann auch unter dem Begriff "Torsionssonotrode" bekannt. Unter torsional wird eine Schwingung der Sonotrode um ihre Längsachse verstanden, d.h. die Sonotrode führt eine torsionale Bewegung um eine Torsionsachse (Längsachse) aus. Die Vorrichtung weist weiter einen der Sonotrode gegenüberliegenden Amboss auf. Zwischen Sonotrode und Amboss ist wenigstens ein Gegenstand zum Erzielen einer Kerbung (Scoring) oder einer Trennung (Trennschweissung) oder zwischen Sonotrode und Amboss sind wenigstens zwei Gegenstände zum Erzielen einer Schweissverbindung durchführbar. Dabei weist der Amboss einen Angriffsabschnitt auf, an dem der wenigstens eine Gegenstand oder die wenigstens zwei Gegenstände entlang führbar ist bzw. sind. Die Sonotrode weist eine Arbeitsfläche zum Beaufschlagen des wenigstens einen Gegenstands mit Ultraschall-Schwingungen auf, wobei der Angriffsabschnitt und/oder die Arbeitsfläche wenigstens in einer Neutralstellung wenigstens abschnittsweise etwa parallel zur Längsachse der Sonotrode verlaufen. Die Gegenstände können kontinuierlich zwischen dem Angriffsabschnitt und der Arbeitsfläche durchgeführt werden. Die Arbeitsfläche führt Schwingungen aus, die etwa senkrecht zu ihr verlaufen.

In einer vorteilhaften Ausführungsform kann die Sonotrode wenigstens einen Schlitz aufweisen, in den ein Eingriffsglied des Ambosses einführbar oder eingeführt ist, so dass ein Spalt für den wenigstens einen Gegenstand gebildet wird. Für den vorgängig genannten Fall, bei dem zwei Gegenstände zum Erzielen einer Schweissverbindung zwischen Sonotrode und Amboss durchgeführt werden, wird für den Spalt der Begriff "Schweissspalt" verwendet. Durch den Schweissspalt zwischen Sonotrode und Amboss können zum Beispiel zwei flächig aufeinander liegende Folien (-teile) randseitig durch den Schweissspalt geführt und so verschweisst werden. Mit dieser Vorrichtung lassen sich auf einfache Art und Weise kontinuierliche Längsschweissnähte erzeugen. Selbstverständlich ist mit dieser Vorrichtung aber auch eine diskontinuierliche Betriebsweise möglich, bei der einzelne Schweissnähte durch unverschweisste Abschnitte unterbrochen sind. Mit der Vorrichtung können vorteilhaft Kunststofffolien oder auch Metallfolien (z.B. Aluminiumfolien) sowie beschichtete Folien verarbeitet werden. die Folien können mit Fördermitteln durch den Schweissspalt gezogen oder auf andere Weise bewegt werden. Dieses Führen der Folienränder durch den zwischen Eingriffsglied und Arbeitsfläche gebildeten Schweissspalt gewährleistet einen sicheren und effizienten Betrieb während einem Schweissvorgang. Grundsätzlich eignet sich die Vorrichtung zum Verbinden verschiedener Arten von Gegenständen. Beispielsweise könnte mit der Vorrichtung auch ein folienartiger Deckel an einen mit einem Kragen versehenen Behälter angeschweisst werden. Im letztgenannten Anwendungsfall müsste der Kragen durch die Anordnung mit dem Schweissspalt entlang des Kragens geführt werden. Neben den bereits erwähnten Vorteilen kann die Vorrichtung auch auf günstige Weise in einer automatischen Produktionslinie eingefügt und verwendet werden. Wenn der Anfang des eigentlichen Schweissspalts (z.B. gebildet durch die vorgängig erwähnten Wiegekante) etwa mittig, d.h. durch oder benachbart zur Sonotrodenachse verläuft, ist die Amplitude in einem zentralen Bereich null oder jedenfalls sehr gering. Gegen den Rand der Sonotrode erhöht sich die Amplitude. Damit kann eine kontinuierliche Zunahme erzielt werden.

Die Arbeitsfläche kann durch eine entsprechende Ausgestaltung wenigstens des dem Amboss zugewandten stirnseitigen Endes der Sonotrode geschaffen werden. Beispielsweise kann an der Stirnseite der Sonotrode ein sich in axialer Richtung erstreckende Zunge (beispielsweise ein sich in axialer Richtung erstreckendes abgeflachtes Profil) angeformt oder auf andere Art und Weise angebracht sein. Zum Vorgeben der Arbeitsfläche kommt auch eine stufenartige Aussparung im Bereich der Stirnseite der Sonotrode in Frage. Es wäre sogar auch denkbar, dass - anstatt der Sonotrode - der Amboss wenigstens einen Schlitz aufweisen könnte. Das Eingriffsglied wäre in diesem Fall somit der Sonotrode zugeordnet. In diesem Fall könnte das der Sonotrode zugeordnete Eingriffsglied als sich in Richtung der Längsachse erstreckende, beispielsweise zapfenförmige Zunge ausgestaltet sein. Das Vorsehen eines oder mehrer Schlitzes in der Sonotrode ist also für bestimmte Anwendungsfälle nicht zwingend erforderlich.

Theoretisch ist es sodann auch denkbar, dass die Vorrichtung mit mehreren parallel verlaufenden oder sogar sich kreuzenden Schlitzen versehen sein könnte. Bevorzugt weist die Sonotrode aber nur einen Schlitz auf.

In einer ersten Ausführungsform kann der Schlitz eine sich in einer Nutrichtung erstreckende Nut sein, wobei die Nutrichtung quer, vorzugsweise rechtwinklig zur Längsachse der Sonotrode verlaufen kann und/oder Seitenwände aufweist, die parallel zur Längsachse verlaufen und die Arbeitsfläche bilden. Die Nutrichtung gibt im Übrigen auch die Fortbewegungsrichtung der Gegenstände im Schweissbetrieb vor. Vorteilhaft ist der Schlitz als durchlaufende Nut ausgestaltet, wobei der Nutquerschnitt vorzugsweise rechteckig sein kann. Somit können zwei aufeinander gelegte Kunststofffolien randseitig besonders einfach in Nutrichtung durch den Schlitz bzw. den Schweissspalt gezogen werden.

Besonders vorteilhaft kann es sein, wenn der Schlitz eine Nut ist, der gegenüber einer Stirnfläche in Richtung der Längsachse der Sonotrode vertieft ist. Diese Vertiefung legt die Nuttiefe fest. Für die erstgenannte Variante, bei der der Schlitz der Sonotrode und das Eingriffsglied dem Amboss zugeordnet ist, kann die dem Amboss zugewandte Seite der Sonotrode die genannte Stirnfläche bilden.

Die Nuttiefe des Schlitzes legt eine Obergrenze für Schweissnahtbreite fest. Die Breite der Schweissnaht kann etwa die Eindringtiefe des Eingriffglieds in den Schlitz sein. Der Schlitz kann eine Nuttiefe aufweisen, die zwischen 5 und 30 mm und bevorzugt zwischen 10 und 15 mm liegt. Die Nutbreite kann zwischen 5 und 15 mm liegen und bevorzugt bei einem Sonotrodendurchmesser von 40 - 50mm etwa 10 mm betragen. Das zum Schlitz korrespondierende Eingriffsglied kann wenigstens in Bezug auf die Breitenausdehnung ein Untermass aufweisen. Die Schweissspaltbreite hängt vom Folienmaterial und der Foliendicke ab. Die Breite des Schweissspaltes (Spaltmass) variiert für gängige Foliendicken (z.B. 20-150 µm).

In einer weiteren Ausführungsform kann der Schlitz zwei einander gegenüberliegende Seitenwände aufweisen, wobei eine der Seitenwände eine Arbeitsfläche zum Beaufschlagen der wenigstens eine Gegenstand mit Ultraschallschwingungen bilden kann. Dabei kann der Amboss oder die Sonotrode einen der Arbeitsfläche zugewandten Angriffsabschnitt aufweisen, wobei zwischen Arbeitsfläche und Angriffsabschnitt der Schweissspalt liegt. Der Angriffsabschnitt kann eine Führungsfläche für ein Folienteil bilden. Während einem Schweissvorgang können die Gegenstände auf der einen Seite an dieser Führungsfläche in flächiger Auflage entlang gleiten und auf der anderen Seite können die Gegenstände von der Arbeitsfläche mit Ultraschallschwingungen beaufschlagt werden.

Das Eingriffsglied oder die Sonotrode kann mittels Federmitteln zum Erzeugen eines Anpressdrucks unter einer Vorspannung gegen eine Arbeitsfläche des Schlitzes abstützbar oder abgestützt sein. Mit dieser Federanordnung ergibt sich eine vorteilhafte Spaltkompensation. Damit können zum Beispiel plötzlich auftretende Dickstellen (z.B. Foliensplice, Falten usw.) beim Durchführen des wenigstens einen Gegenstands kompensiert werden. Insbesondere können dadurch beispielsweise Kunststofffolien oder andere Folienteile sowie sehr dünne Gegenstände wie etwa Membranen vor Beschädigungen auf einfache Art und Weise geschützt werden. Auch erlaubt diese Anordnung das Verbinden von aufeinanderfolgenden überlappenden Folienbahnen (sogenanntes Splicing).

Zum Einstellen der Breite des Schweissspalts oder zum Einstellen des durch die Federmittel erzeugten Anpressdrucks kann das Eingriffsglied oder ein dem Spalt zugeordnetes Teil des Ambosses über einen Verstellmechanismus bewegbar an einer Ambosshalterung befestigt sein. Dadurch lässt sich die Vorrichtung auf einfache Art und Weise an unterschiedliche Dicken von zu verschweissenden Gegenständen anpassen. Zusätzlich oder alternativ kann die Vorrichtung über einen Verstellmechanismus verfügen, mit dessen Hilfe die Winkellage des Eingriffsglieds in Bezug auf den Spalt verstellbar ist. Mit der Winkellagenverstellung kann betreffend die Neutralstellung je nach Wunsch eine exakte Planparallelität von Arbeitsfläche und Angriffsabschnitt oder ein sich öffnender oder sich verengender Schweissspalt eingestellt werden.

Das Eingriffsglied des Ambosses oder ein dem Spalt zugeordnetes Teil des Ambosses kann um eine Schwenkachse schwenkbar (oder kippbar) an einer Ambosshalterung gelagert sein. Die Schwenkachse kann dabei achsparallel zur Längsachse der Sonotrode verlaufen. Die Schwenkachse kann beispielsweise durch einen Achsenzapfen und ein komplementäres Drehlager vorgegeben sein. Selbstverständlich ist es aber auch denkbar, dass die Vorrichtung über eine imaginäre Schwenkachse verfügen könnte. Beispielsweise kann das Eingriffsglied nur an zwei seitlich angeordneten Federn an der Ambosshalterung abgestützt sein, wodurch ebenfalls eine Schwenk- oder Kippbewegung des Eingriffsglieds möglich wäre.

Vorteile können sich ergeben, wenn das Eingriffsglied etwa U-förmig oder bügelförmig ausgestaltet ist. Dabei kann das Eingriffsglied zur Bildung der U- oder Bügelform zwei Befestigungsarme und einen diese verbindenden Stegabschnitt aufweisen. Der Stegabschnitt kann dabei im Schlitz aufgenommen oder aufnehmbar sein. Das Eingriffsglied kann derart positioniert bzw. ausgerichtet sein, dass das U auf einer Ebene liegt, deren Flächennormale parallel zur Längsachse verläuft.

Besonders vorteilhaft kann es sein, wenn im Verbindungsbereich zwischen einer Ambosshalterung und den Befestigungsarmen jeweils ein Federelement, beispielsweise eine Schraubendruckfeder zur federnden Abstützung vorgesehen ist.

Eine vorteilhafte Schweissung lässt sich erreichen, wenn das Eingriffsglied in Bezug auf die Nutrichtung länger als der Spalt ist und vorzugsweise beidseitig den Spalt überragt. Wenn beispielsweise das Eingriffsglied U-förmig oder bügelförmig ausgestaltet ist, können die Befestigungsarme jeweils an den den Spalt überragenden Teil des Stegabschnitts angeformt sein.

Das Eingriffsglied enthaltend die beiden Befestigungsarme und den Stegabschnitt kann als einstückiger Körper aus Metall (z.B. Stahl) ausgestaltet sein. Derartige einstückige Bauteile lassen sich durch Fräsoperationen auf einfache Art und Weise fertigen.

Das Eingriffsglied kann im Bereich des Eingriffabschnitts eine Kante aufweisen. Die Kante kann zum Beispiel eine Wiegekante sein, an die eine Keilfläche anschliesst. Die Kante kann sich in der Mitte des Eingriffsglieds befinden. Die Kante kann weiterhin derart in der Vorrichtung positioniert sein, dass sie in Bezug auf die Nutrichtung etwa in der Mitte des Schlitzes liegt.

Theoretisch ist es denkbar, dass der Angriffsabschnitt in einer Draufsicht konvex gekrümmt sein kann.

Für bestimmte Anwendungsfälle kann es vorteilhaft sein, wenn die durch eine Seitenwand gebildete Arbeitsfläche plan ist.

Vorteilhaft kann es aber auch sein, wenn die durch eine Seitenwand gebildete Arbeitsfläche konturiert ist. Beispielsweise könnte die Seitenwand mit einer Mehrzahl von zum Beispiel etwa punktförmigen Vorsprüngen versehen sein, wodurch die beiden Gegenstände punktuell mit Ultraschallschwingungen beaufschlagt werden können.

Besonders vorteilhaft kann es aber sein, wenn die Kontur durch wenigstens einen rippenartigen Vorsprung gebildet wird. Bevorzugt weist die Kontur dabei mehrere rippenartige Vorsprünge auf. Die Kontur kann in Nutrichtung verlaufende Längsrippen aufweisen.

In einer weiteren Ausführungsform kann das Eingriffsglied oder der Schlitz zum axialen Abstützen der Sonotrode ein Stützsegment aufweisen. Das Stützsegment kann sich in Richtung der Längsachse erstrecken. Das Stützsegment kann dabei wenigstens in einer Arbeitsposition derart positioniert sein, dass das Stützsegment einen Angriffspunkt definiert, der vorzugsweise in der Längsachse der Sonotrode liegt. Ein solcher mittiger Angriffspunkt ergibt einen Festanschlag oder Nullpunktkontakt, der im Ultraschweissvorgang nicht mitschwingt. Das Stützsegment kann beispielsweise ein am Boden des Schlitzes angeformter oder auf andere Weise befestigter kegelförmiger Vorsprung sein. Durch die Kegelspitze ist ein vorteilhafter punktueller Anschlag gewährleistet. Selbstverständlich sich neben der Kegelform auch andere Formgebungen für den Vorsprung denkbar.

Ein weiterer Aspekt der Erfindung betrifft ein Verfahren zum Ultraschallschweissen von wenigstens zwei vorzugsweise flächigen Gegenständen. Das Verfahren kann auf vorteilhafte Art und Weise auf der vorgängig beschriebenen Vorrichtung ausgeführt werden. Das Verfahren zeichnet sich dadurch aus, dass beispielsweise zum Erzeugen einer Längsnaht die wenigstens zwei Gegenstände durch einen zwischen einer Arbeitsfläche einer Torsionssonotrode und einem Angriffsabschnitt gebildeten Schweissspalt geführt werden. Die Arbeitsfläche verläuft etwa parallel zur Achse der Torsionssonotrode. Die Beaufschlagung mit Ultraschallschwingungen beim vorliegenden Ultraschallschweiss-Verfahren erfolgt etwa senkrecht zu den Gegenständen mittels einer torsional schwingenden Sonotrode, die über wenigstens einen Schlitz verfügt.

Weitere Einzelmerkmale und Vorteile der Erfindung ergeben sich aus der nachfolgenden Beschreibung der Ausführungsbeispiele und aus den Zeichnungen. Es zeigen:
- Figur 1: eine perspektivische, stark vereinfachte Darstellung einer erfindungsgemässen Vorrichtung zum Ultraschall- schweissen in einer Arbeitsstellung,
- Figur 2: die Vorrichtung gemäss Figur 1 mit einer Sonotrode in einer Ruhestellung,
- Figur 3: einen Querschnitt durch die Vorrichtung gemäss Figur 1 (Schnittebene x-y),
- Figur 4: eine weitere Schnittdarstellung der Vorrichtung (Schnittebene y-z),
- Figur 5: eine Draufsicht auf eine Sonotrode und eine in deren Schlitz angeführtes Eingriffsglied einer Vorrichtung gemäss einem zweiten Ausführungsbeispiel,
- Figur 6: eine Querschnittsdarstellung der Anordnung gemäss Figur 5,
- Figur 7: eine perspektivische, stark vereinfachte Darstellung einer erfindungsgemässen Vorrichtung gemäss einem al- ternativen Ausführungsbeispiel,
- Figur 8: eine Seitenansicht der Vorrichtung gemäss Figur 7,
- Figur 9: eine perspektivische Darstellung einer Sonotrode für ein weiteres Ausführungsbeispiel einer Vorrichtung zum Ultraschallschweissen,
- Figur 10: eine perspektivische Darstellung der Vorrichtung gemäss einem weiteren Ausführungsbeispiel,
- Figur 11: eine Draufsicht auf die Vorrichtung gemäss Figur 10,
- Figur 12: einen Ausschnitt eines Querschnitts durch die Vorrich- tung gemäss Figur 10 in einer vergrösserten Darstel- lung,
- Figur 13: eine Draufsicht auf eine Sonotrode der Vorrichtung ge- mäss Figur 10,
- Figur 14: eine perspektivische Darstellung eines Eingriffsglieds der Vorrichtung gemäss Figur 10, und
- Figur 15: eine Draufsicht auf das Eingriffsglied.

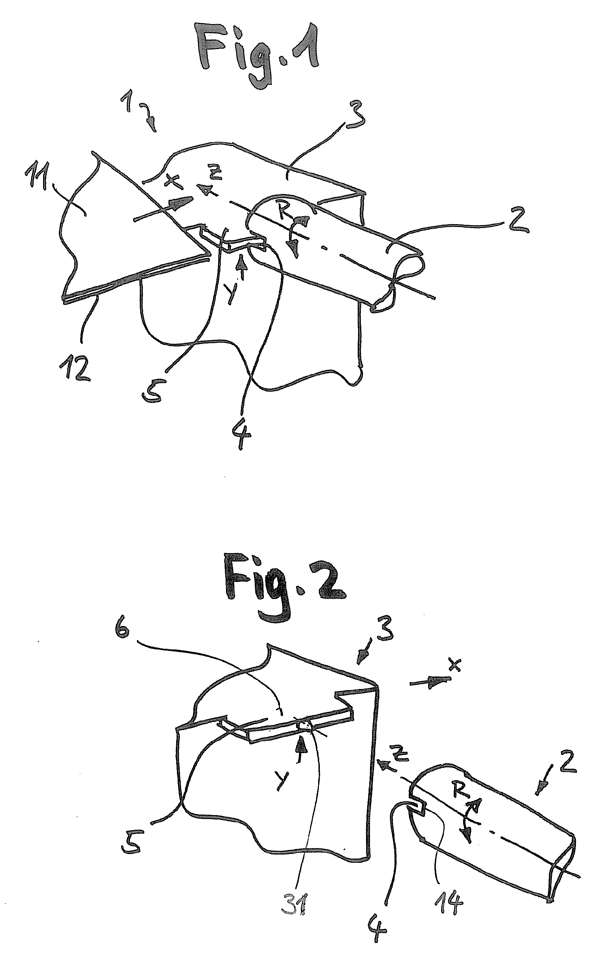

Figur 1 zeigt eine vereinfachte Darstellung einer insgesamt mit 1 bezeichneten Vorrichtung zum Ultraschallschweissen. Die Vorrichtung weist als Hauptkomponenten eine mittels (hier nicht dargestellten) Anregern zu torsionalen Ultraschallschwingungen anregbaren Sonotrode 2 und einen Amboss 3 auf. Die Sonotrode 2, deren Längsachse in z-Richtung verläuft, ist wenigstens im Bereich des freien Endes zylindrisch ausgestaltet. Mit dem Pfeil R sind die torsionalen Schwingungen der Sonotrode angedeutet. Der Amboss verfügt über ein Eingriffsglied 5, das in einen Schlitz 4 im Bereich eines freien Endes der Sonotrode 2 eingeführt ist. Eine seitliche Begrenzungsfläche des Schlitzes bildet eine Arbeitsfläche der Sonotrode. Dieses und die nachfolgenden Ausführungsbeispiele betreffen eine Variante, bei der der Schlitz der Sonotrode und das Eingriffsglied dem Amboss zugeordnet ist. Theoretisch ist aber auch eine umgekehrte Konfiguration denkbar. In diesem Fall wäre also der Schlitz dem Amboss und das Eingriffsglied der Sonotrode zugeordnet. Da der hier beschriebene Aufbau und die Wirkungsweise etwa in analoger Weise auf die zweite Variante übertragbar ist, wird auf eine Darstellung und weitere Umschreibung der zweiten Variante verzichtet.

Mit der Vorrichtung 1 können zwei aufeinander liegende Kunststofffolien 11 und 12 randseitig miteinander verschweisst werden. Hierzu werden die Folien 11, 12 in x-Richtung durch einen Schweissspalt, der durch eine seitliche Begrenzung des Schlitzes 4 und das darin eingeführte Eingriffsglied 5 gebildet wird, geführt und unter Einwirkung von torsionalen Schwingungen verschweisst. Auf diese Weise entsteht randseitig eine Längsnaht. Die Vorrichtung eignet sich zum randseitigen Verschweissen zweier Folien und insbesondere von Kunststofffolien. Selbstverständlich könnten bei Bedarf drei oder mehrere Folien miteinander verbunden werden. Außerdem ist mit der Vorrichtung auch das kontinuierliche Kerben von Folien (Scoring, z. B. als Aufreisshilfe) oder das vollständige kontinuierliche Trennen oder Trennschweißen von Folien möglich. Anstatt von Kunststoffen ist weiter die Verarbeitung anderer Materialien denkbar, wobei vor allem Folien aus Metall in Frage kommen. Zum Verschweissen mit der nachfolgend näher beschriebnen Vorrichtung eignen sich sodann auch mit Kunststoff beschichtete flächige Gebilde aus Papier oder andere Laminate.

In Figur 2 befindet sich die Sontrode 2 in einer Warteposition. Zum Erstellen der Arbeitsposition (siehe Fig. 1) muss die Sonotrode mittels (hier nicht dargestellten) Antriebsmitteln einer Hub- und Senkvorrichtung oder allenfalls auch manuell in z-Richtung verschoben werden. Im ersten Ausführungsbeispiel ist das Eingriffsglied 5 einstückig am Amboss 3 angeformt und somit im Wesentlichen starr ausgestaltet. Weiterhin ist aus Figur 2 erkennbar, dass die nachfolgend als Angriffsabschnitt bezeichnete Oberseite 6 des Eingriffsglieds 5 plan ausgestaltet ist und auf der x-y-Ebene liegt. Das Eingriffsglied 5 weist stirnseitig ein Stützsegment 31 auf. Dieses Eingriffsglied 5 dient zum axialen Abstützen der Sonotrode 2 in der Arbeitsposition (Fig. 1). Das Stützsegment 31 ist beispielhaft als kegelförmiger Vorsprung ausgestaltet.

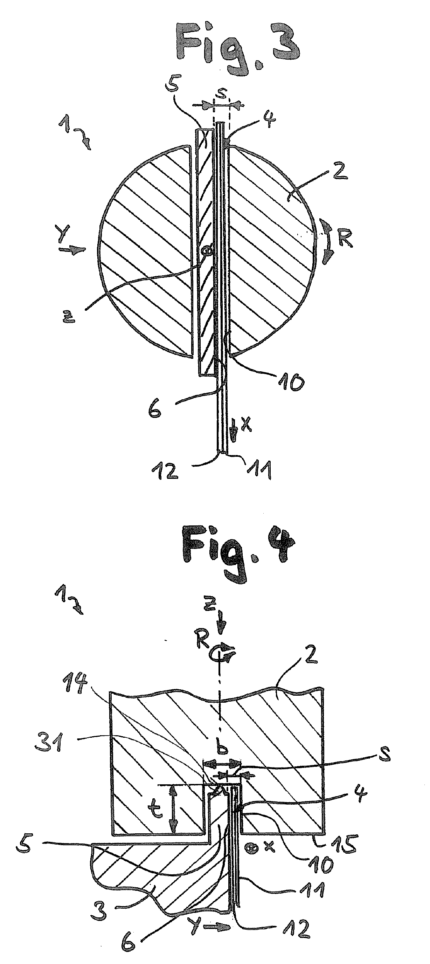

In den Figuren 3 und 4 sind Schnittdarstellungen der Vorrichtung gezeigt. Anhand Figur 3 ist erkennbar, dass die Länge des Eingriffsglieds 5 grösser als der Durchmesser der Sonotrode 2 ist und dass das Eingriffsglied 5 den Schlitz 4 auf beiden Seiten überragt. Figur 3 zeigt weiterhin, dass der Schlitz 4 eine durchgehende, in x-Richtung sich erstreckende Längsnut ist. Beim Vorbeiführen der Gegenstände 11, 12 durch die Anordnung mit dem Schweissspalt wird auf die zu verarbeitenden Gegenstände durch Stösse im Ultraschallbereich etwa senkrecht (d.h. in y-Richtung) eingewirkt. Mit anderen Worten verwendet die erfindungsgemässe Vorrichtung zwar Torsions-Sonotroden, die eigentliche Beaufschlagung der zu verbindenden Gegenstände erfolgt allerdings durch Longitudinalstösse. Dabei ist die Breite der Schweissnaht etwa durch die Eindringtiefe des Eingriffglieds 5 in den Schlitz 4 vorgegeben.

Wie aus Figur 4 hervorgeht, ist die Nut gegenüber der Stirnfläche 15 der Sonotrode 2 in Richtung der Längsachse bzw. also z-Richtung vertieft. Aus Figur 4 geht hervor, dass der Spalt 4 als im Querschnitt rechteckige Nut ausgestaltet ist, wobei die Nuttiefe mit t und die Nutbreite mit b bezeichnet ist. Die Nuttiefe t liegt z.B. zwischen 5 und 30 mm und bevorzugt zwischen 10 und 15 mm, die Nutbreite b liegt zwischen 5 und 15 mm und beträgt bevorzugt etwa 10 mm. Mit s ist das Spaltmass des Schweissspaltes bezeichnet. Der Schlitz weist zwei planparallel zueinander verlaufende Seitenwände 10, 13 auf, wobei die Seitenwand 10 den Folien 11, 12 zugewandt ist und eine plane Arbeitsfläche 10 bildet. Der Abstand der Arbeitsfläche 10 von dem Angriffsabschnitt 6 legt das Spaltmass s des Schweissspaltes fest. Das Stützsegment 31 bildet in axialer Richtung einen etwa punktförmigen Anschlag des Eingriffsglieds 5 zur Sonotrode 2. Wie Figur 4 zeigt, erstreckt sich das als kegelförmiger Vorsprung ausgebildete Stützsegment in axialer Richtung; die Kegelspitze liegt ersichtlicherweise auf der z-Achse.

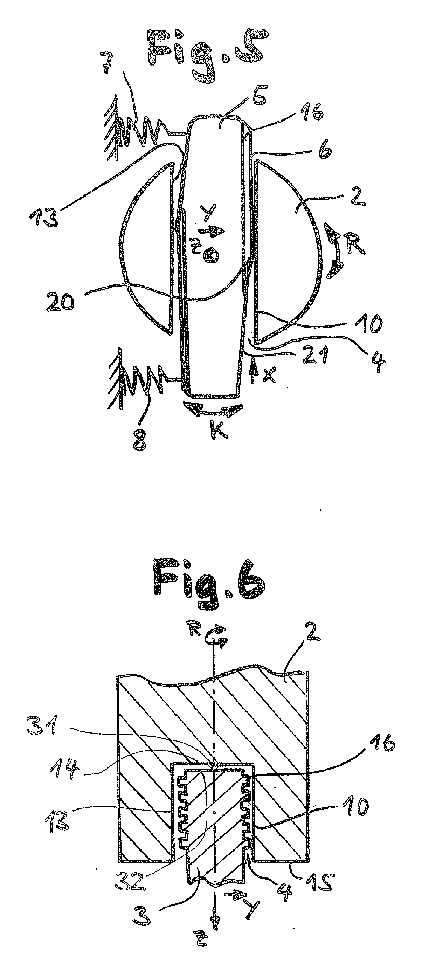

Im Unterschied zum vorgehenden Ausführungsbeispiel ist in Figur 5 das Eingriffsglied 5 mit dem Amboss nicht starr verbunden, sondern federnd an diesem gelagert. Entsprechende Federn sind mit 7 und 8 angedeutet. Mit den Federn 7, 8 kann erreicht werden, dass die zu verschweissende Folie unter Einwirkung einer Vorspannkraft beim Durchgang durch den Schweissspalt einer Pressung oder Druckkraft unterliegt. Weiter können durch die schwimmende Lagerung die Federn 7, 8 auch bewirken, dass das Eingriffsglied Schwenkbewegungen ausführen kann. Die entsprechende Schwenkachse ist dabei identisch mit der Längsachse z. Das Eingriffsglied 5 im Bereich des Angriffsabschnitts 6 eine Wiegekante 20 auf, an die eine Keilfläche 21 anschliesst.

Zum Einstellen der Breite des Schweissspalts und/oder zum Einstellen des Anpressdrucks ist das Eingriffsglied 5 mittels einem (hier nicht dargestellten Verstellmechanismus) in y-Richtung bewegbar an einer Ambosshalterung befestigt.

In Figur 5 sind sodann mit 16 bezeichnete Rippen erkennbar, deren genaue Ausgestaltung sich aus Figur 6 ergibt. Figur 6 zeigt eine Seitenansicht mit der Sonotrode 2 und dem Eingriffsglied 5. Ersichtlicherweise ist die gebildete Arbeitsfläche 10 konturiert und weist eine Mehrzahl von rippenartigen, in x-Richtung verlaufende Vorsprünge 16 auf. Die Rippenanordnung (oder eine andere Oberflächenprofilierung oder Kontur) führt - im Gegensatz zu konturlosen Ausgestaltungen - zu einer Schweissverbindung, bei der nicht der gesamte Überlappungsbereich verschweisst ist. Die Rippenkontur erfüllt die Funktion des Energierichtungsgebers. Dies ermöglicht eine gezielte Energieeinleitung in die Schweisszone. In Figur 6 ist weiterhin ein Stützsegment 31 erkennbar. Im Unterschied zum vorhergehenden Ausführungsbeispiel (vgl. Fig. 4) ist das Stützsegment 31 jedoch nicht dem Eingriffsglied, sondern dem Schlitz zugeordnet. Das Stützsegment 31 ist ein etwa mittig im Nutboden 14 angeordneter kegelförmiger Vorsprung. Dessen Kegelspitze liegt ersichtlicherweise auf der z-Achse und bildet damit einen vorteilhaften Festanschlag oder Nullpunktkontakt, der im Ultraschweissvorgang nicht mitschwingt.

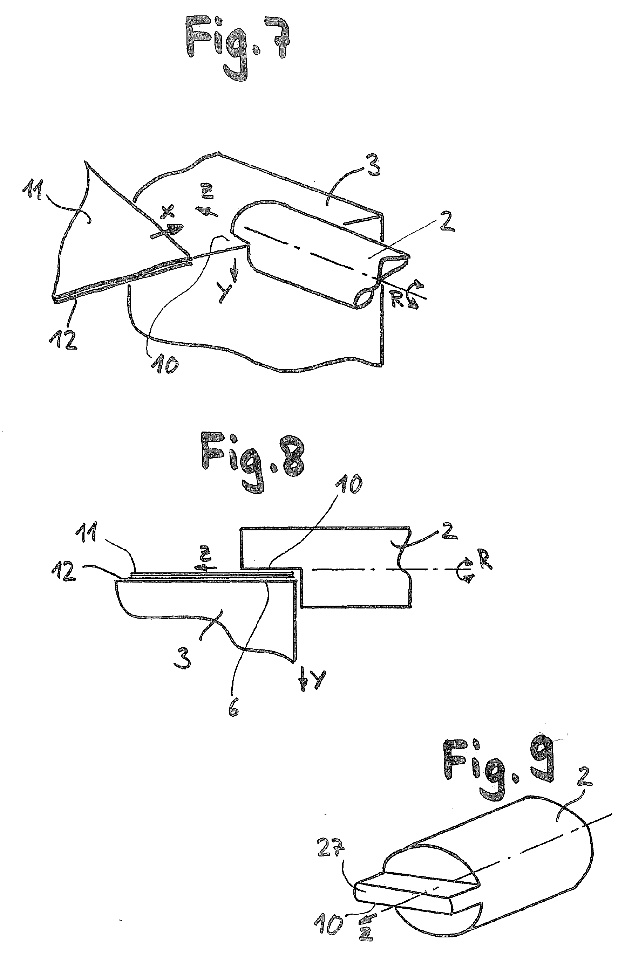

In den Figuren 7 und 8 ist eine alternative Vorrichtung 1 zum Ultraschallschweissen vereinfacht dargestellt. Im Gegensatz zu den vorgängig beschriebenen Ausführungsbeispielen weist die Sonotrode keinen Schlitz auf. Stattdessen weist die Sonotrode 2 eine stufenartige Aussparung auf, die eine mit 10 bezeichnete Arbeitsfläche bildet (Figur 8). Die der Arbeitsfläche der Sonotrode 3 zugewandte Oberseite des Amboss 3 bildet den Angriffsabschnitt 6. Der Angriffsabschnitt 6 bildet für den Transport der Folien 11,12 während dem Ultraschallschweissen eine Gleitfläche für die Folien. Wie die Figuren 7 und 8 zeigen, verlaufen der Angriffsabschnitt 6 und die Arbeitsfläche 10 in der Neutralstellung parallel zur Längsachse z der Sonotrode 2. Zwischen Angriffsabschnitt 10 und Arbeitsfläche 10 werden zum Erzielen der Schweissverbindung die beiden aufeinander liegenden Folien geführt, die Folien mit Ultraschall-Schwingungen der Sonotrode 2 beaufschlagt werden.

Eine weitere alternative Ausgestaltung einer Sonotrode ist in Figur 9 gezeigt. Die Sonotrode weist ein in Längsrichtung z sich erstreckendes abgeflachtes Profil auf, das an einem zylindrischen Grundkörper angeformt ist. Das Profil weist eine Profilseite auf, die etwa parallel zur Längsachse z der Sonotrode 2 verläuft. Diese Profilseite ist in Figur 9 mit 10 bezeichnet und bildet eine Arbeitsfläche zum Beaufschlagen von Gegenständen mit Ultraschallschwingungen.

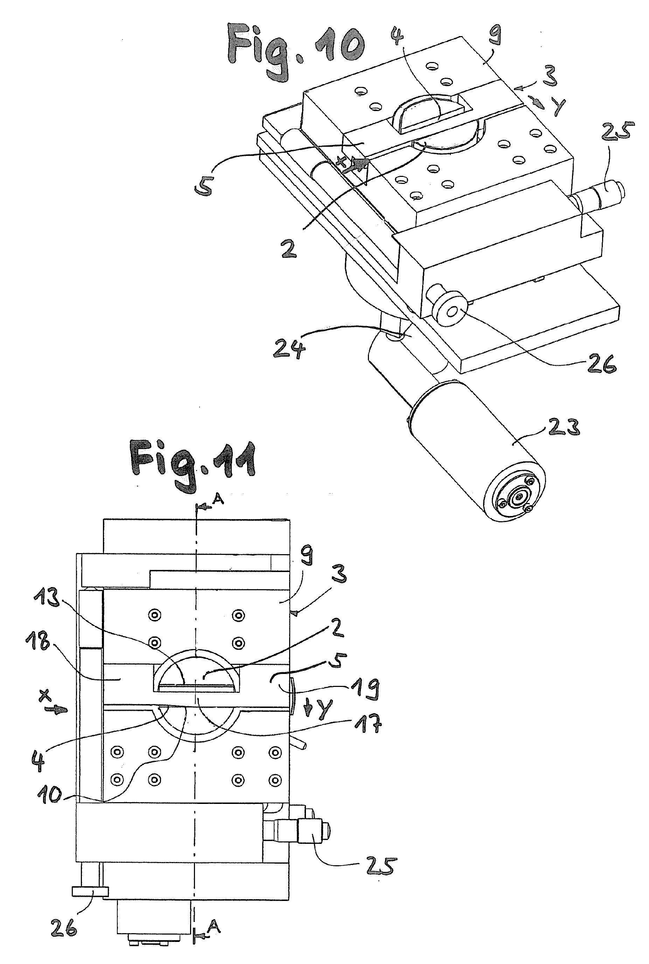

Figur 10 zeigt eine konstruktive Ausgestaltung einer Vorrichtung zum Ultraschallschweissen in der in den Figuren 1 bis 4 beschriebenen Art. Die Vorrichtung 1 weist einen Konverter 23 auf, der mit einem Torsionsschwinger 24 verbunden ist. Der Torsionsschwinger 24 ist seinerseits mit der Sontrode 2 verbunden. Der Amboss 3 weist eine Ambosshalterung 9 auf, an der das Eingriffsglied 5 befestigt ist. Damit sich die Schwingungen nicht auf die Ambosshalterung 9 übertragen können, ist diese vergleichsweise massiv ausgebildet. Die Vorrichtung weist einen Verstellmechanismus auf, mit welcher die Position des Eingriffsglieds 5 im Schlitz 4 der Sonotrode 2 verändert werden kann. Mit 25 ist eine Einstellschraube zum Verschieben des Eingriffsglieds in y-Richtung und mit 26 ist eine Einstellschraube zum Einstellen der Winkellage des Eingriffsglieds im Spalt bezeichnet. Mit dem Pfeil x ist die Fortbewegungsrichtung der miteinander zu verschweissenden Gegenstände angedeutet. Mit dieser Vorrichtung ist insbesondere auch ein Verschweissen von sehr dünnwandigen Gegenständen wie Folien oder Membranen möglich. Zum Betrieb der Vorrichtung 1 hat sich bei Tests Ultraschall im Frequenzbereich von ca. 20 kHz bis 40 kHz als vorteilhaft erwiesen. Die Schwingungsamplitude liegt dabei etwa im Bereich von 25 bis 30 µm.

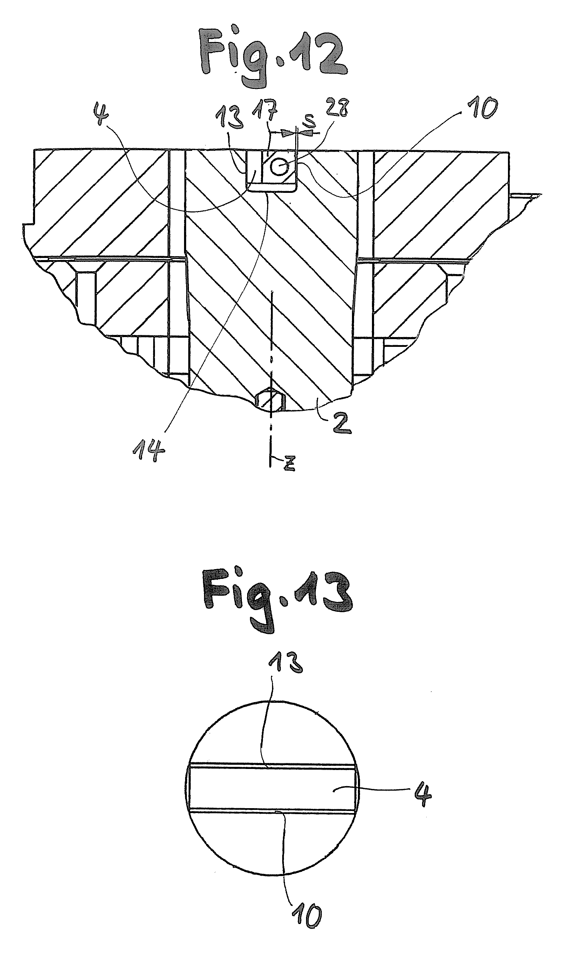

Anhand der Draufsicht gemäss Figur 11 ist erkennbar, dass das Eingriffsglied 5 in einem geringfügigen (und kaum erkennbaren) Abstand von der Arbeitsfläche 10 der Sonotrode 2 entfernt ist und so einen vorteilhaften Schweissspalt bildet (vgl. hierzu nachfolgende Fig. 12). Zum Erzeugen eines Anpressdrucks ist das Eingriffsglied 5 mittels (hier nicht dargestellten) Federmittels unter einer Vorspannung gegen die Sonotrode 2 in y-Richtung abgestützt. In Gegenrichtung zur Fortbewegungsrichtung x, d.h. in einem eingangsseitigen Bereich ist der Zwischenraum zwischen Amboss und Sonotrode aufgeweitet und bildet so einen Einführspalt zum erleichterten Einführen der Folien in den Schweissspalt.

In Figur 12 ist der Schweissspalt mit s bezeichnet. Zwischen der die Arbeitsfläche bildenden Seitenwand 10 und einem im Schlitz aufgenommenen Stegabschnitt 17 des Eingriffsglieds 5 befindet sich der Schweissspalt, der für gängige dünne Folien etwa 0.01 mm betragen kann. Weiter zeigt Figur 12 mit 30 und 30' bezeichneten Nuten sowie einen Kühlkanal 28, durch den ein Kühlmittel durchleitbar ist. Der Stegabschnitt 17 liegt in der in Figur 12 gezeigten Arbeitsposition in Bezug auf die Längsrichtung frei bzw. kommt mit dem Boden 14 der Nut nicht in Berührung. Selbstverständlich könnte man aber auch hier eine axiale Abstützung des Eingriffsglieds am Amboss vorsehen. Beispielsweise könnte man ein Stützsegment vorsehen, das analog zur Figur 4 oder Figur 6 entweder dem Eingriffsglied oder dem Boden des Schlitzes zugeordnet ist.

In Figur 13 ist die Sonotrode in einer Draufsicht dargestellt. Aus Figur 13 ist deutlich erkennbar, dass der Schlitz 4 als Längsnut mit einer Nutbreite b ausgestaltet ist. Der Schlitz 4 weist zwei einander gegenüberliegende, etwa parallel verlaufende Seitenwände 10 und 13 auf, wobei die Seitenwand 10 die Arbeitsfläche zum Beaufschlagen der Gegenstände mit Ultraschall-Schwingungen bildet. Zum Abstimmen der Amplitude bzw. zum Massenausgleich können in der Stirnfläche der Sonotrode beispielsweise durch Fräsoperationen geschaffene Aussparungen oder Vertiefungen vorgesehen werden, die die Funktion der Sonotrode stabilisieren können.

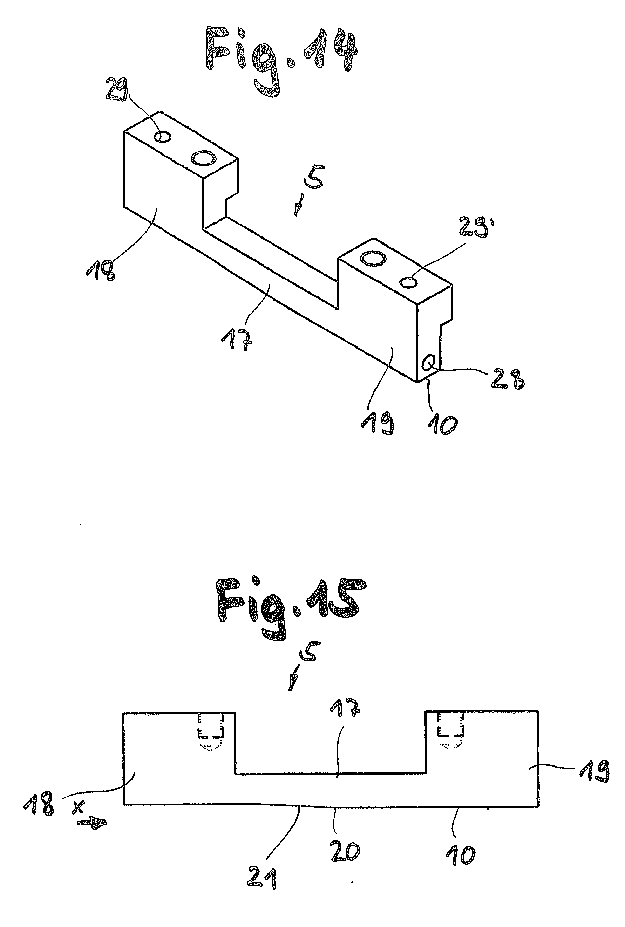

In den Figuren 14 und 15 ist das Eingriffsglied 5 dargestellt. Dieses Bauteil ist etwa U-förmig ausgestaltet und weist zwei Befestigungsarme 18 und 19 und einen diese verbindenden Stegabschnitt 17 auf. In Figur 14 sind durch Bohrungen geschaffene Ein- bzw. Ausgänge 28, 29 und 29' für Kühlkanäle erkennbar, über die ein Kühlmittel in das Eingriffsglied ein- und abgeleitet werden kann. Sodann sind innen neben den mit 29 und 29' bezeichneten Bohrungen (nicht näher bezeichnete) Gewindebohrungen zum Befestigen des Eingriffsglied an der Ambosshalterung angeordnet. Das Eingriffsglied 5 kann ein durch Bohr- und Fräsoperationen geschaffenes, einstückiges Bauteil aus Stahl sein.

Figur 15 zeigt sodann, dass das Eingriffsglied 5 eingangsseitig einen geraden Abschnitt und einen daran in x-Richtung anschliessenden schrägen Abschnitt (Keilabschnitt) 21 aufweist. Der Keilabschnitt 21 endet in der Kante 20, an die dann der eigentliche Angriffsabschnitt 10 für die Verschweissung anschliesst. Die vorzugsweise mittige Kante 20 dient vorzugsweise als Festanschlagspunkt, der im Ultraschweissvorgang nicht mitschwingt. Der erstgenannte Abschnitt und der Keilabschnitt 21 geben den Einführspalt vor, über den die zu verschweissenden Gegenstände auf einfache Art und Weise in den dem Angriffsabschnitt 10 zugeordneten Schweissspalt einführbar sind. Im Einführspalt, d.h. bis zur Kante 20 findet kein Verschweissen statt. Ab der Kante 20 nimmt die Schwingungsamplitude kontinuierlich zu.

## Patentansprüche

1. Vorrichtung zur Ultraschallbehandlung, insbesondere zum Ultraschallschweissen von wenigstens zwei vorzugsweise flächigen Gegenständen (11, 12), insbesondere von Kunststofffolien, oder zum Ultraschallkerben oder -trennschweissen von wenigstens einem vorzugsweise flächigen Gegenstand,
mit einer Sonotrode (2) und einem der Sonotrode gegenüberliegenden Amboss (3), wobei die Sonotrode mittels Anregern (23, 24) zu torsionalen Ultraschallschwingungen anregbar ist, **dadurch gekennzeichnet, dass** zwischen Sonotrode (2) und Amboss (3) der wenigstens eine Gegenstand (11, 12) zum Erzielen einer Schweissverbindung, einer Kerbung oder einer Trennung durchführbar sind, wobei der Amboss (3) einen Angriffsabschnitt (6) aufweist, an dem der wenigstens eine Gegenstand (11, 12) entlang führbar ist und wobei die Sonotrode (2) eine Arbeitsfläche (10) zum Beaufschlagen des wenigstens einen Gegenstands mit Ultraschall-Schwingungen aufweist, wobei der Angriffsabschnitt (6) und/oder die Arbeitsfläche (10) wenigstens in einer Neutralstellung wenigstens abschnittsweise etwa parallel zur Längsachse (z) der Sonotrode verlaufen.

2. Vorrichtung nach Anspruch 1, **dadurch gekennzeichnet, dass** die Sonotrode (2) zum Vorgeben der Arbeitsfläche (10) eine stirnseitig angeordnete, als sich in Richtung der Längsachse (z) erstreckende Zunge (4) aufweist.

3. Vorrichtung nach Anspruch 1, **dadurch gekennzeichnet, dass** die Sonotrode (2) wenigstens einen Schlitz (4) zum Vorgeben der Arbeitsfläche (10) aufweist, in den wenigstens ein den Angriffsabschnitt (6) bildendes Eingriffsglied (5) des Ambosses (3) einführbar oder eingeführt ist, so dass zwischen Angriffsabschnitt (6) und die Arbeitsfläche (10) ein Spalt, insbesondere ein Schweissspalt für den wenigstens einen Gegenstand (11, 12) gebildet wird.

4. Vorrichtung nach Anspruch 3, **dadurch gekennzeichnet, dass** der Schlitz (4) eine sich in einer Nutrichtung (x) erstreckende Nut ist, wobei die Nutrichtung (x) quer, vorzugsweise rechtwinklig zur Längsachse (z) der Sonotrode verläuft.

5. Vorrichtung nach Anspruch 3 oder 4, **dadurch gekennzeichnet, dass** der Schlitz (4) eine Nut ist, die gegenüber einer Stirnfläche (15) in Richtung der Längsachse (z) vertieft ist.

6. Vorrichtung nach einem der Ansprüche 3 bis 5, **dadurch gekennzeichnet, dass** der Schlitz (4) zwei einander gegenüberliegende Seitenwände (10, 13) aufweist, wobei eine der Seitenwände (10) die Arbeitsfläche zum Beaufschlagen des wenigstens einen Gegenstands mit Ultraschall-Schwingungen bildet.

7. Vorrichtung nach einem der Ansprüche 1 bis 6, **dadurch gekennzeichnet, dass** das Eingriffsglied (5) oder die Sonotrode (2) zum Erzeugen eines Anpressdrucks unter einer Vorspannung gegen die Arbeitsfläche mittels Federmitteln (7, 8) abstützbar oder abgestützt ist.

8. Vorrichtung nach einem der Ansprüche 2 bis 7, **dadurch gekennzeichnet, dass** das Eingriffsglied (5) oder ein Teil des Ambosses um eine Schwenkachse schwenkbar an einer Ambosshalterung(9) gelagert ist, wobei die Schwenkachse parallel zur Längsachse (z) der Sonotrode verläuft.

9. Vorrichtung nach einem der Ansprüche 3 bis 8, **dadurch gekennzeichnet, dass** das Eingriffsglied (5) etwa U-förmig oder bügelförmig ausgestaltet ist und zur Bildung der U- oder Bügelform zwei Befestigungsarme (18, 19) und einen diese verbindenden Stegabschnitt (17) aufweist, wobei der Stegabschnitt (17) im Schlitz (4) aufgenommen oder aufnehmbar ist.

10. Vorrichtung nach einem der Ansprüche 3 bis 9, **dadurch gekennzeichnet, dass** das Eingriffsglied (5) in Bezug auf die Nutrichtung (x) länger als der Schlitz (4) ist und vorzugsweise beidseitig den Schlitz (4) überragt.

11. Vorrichtung nach einem der Ansprüche 3 bis 10, **dadurch gekennzeichnet, dass** das Eingriffsglied (5) im Bereich des Angriffsabschnitts (6) eine vorzugsweise mittige Kante (20) und wenigstens eine an die Kante anschliessende Keilfläche (21) aufweist.

12. Vorrichtung nach einem der Ansprüche 1 bis 11, **dadurch gekennzeichnet, dass** die Arbeitsfläche (10) konturiert ist.

13. Vorrichtung nach einem der Ansprüche 3 bis 12, **dadurch gekennzeichnet, dass** das Eingriffsglied (5) oder der Schlitz (4) zum axialen Abstützen der Sonotrode (2) ein Stützsegment (31) aufweist.

14. Verfahren zur Ultraschallbehandlung, insbesondere zum Ultraschallschweissen, -kerben oder -trennschweißen von wenigstens einem vorzugsweise flächigen Gegenstand oder von wenigstens zwei vorzugsweise flächigen Gegenständen (11, 12) insbesondere unter Verwendung einer Vorrichtung (1) nach einem der Ansprüche 1 bis 13, bei dem der wenigstens eine vorzugsweise flächige Gegenstand (11, 12) zwischen einer Sonotrode (2) und einem Amboss (3) geführt werden, **dadurch gekennzeichnet, dass** die Sonotrode (2) mittels Anregern (23, 24) in torsionale Schwingungen versetzt wird und dass die der wenigstens eine Gegenstand (11, 12) zum Erzielen einer Schweissverbindung, Kerbung oder Trennung zwischen einem dem Amboss (3) zugeordneten etwa parallel zur Längsachse (z) der Sonotrode verlaufenden Angriffsabschnitt (6) und einer wenigstens in einer Neutralstellung etwa parallel zur Längsachse (z) der Sonotrode verlaufenden Arbeitsfläche (10) der Sonotrode (2) geführt werden.

15. Verfahren nach Anspruch 13, **dadurch gekennzeichnet, dass** die Gegenstände randseitig durch einen Spalt geführt werden, wobei der Spalt durch einen der Sonotrode (2) zugeordneten Schlitz (4) und durch einen in den Schlitz eingeführten, dem Amboss (3) zugeordneten Eingriffsglied (5) gebildet wird.
